# FASCICULE DE BREVET EUROPEEN

(11) **EP 2 674 397 B1**
(45) Date de publication et mention de la délivrance du brevet: **23.08.2017**
(21) Numéro de dépôt: 13167891.4
(22) Date de dépôt: 15.05.2013
(51) Int. Cl.: C01B 33/44, C05D 9/00, A23K 10/16, A23K 20/28, A23K 50/80

(54) **Procédé de préparation d'une argile organophile intercalée et/ou exfoliée à partir d'argile et de macroalgues, produit fertilisant, complément alimentaire pour animaux et aliment pour poisson correspondants**
Herstellungsverfahren eines interkalierten und/oder exfoliierten organophilen Lehms aus Lehm und Makroalgen, entsprechendes Düngemittel, Nahrungsergänzungsmittel für Tiere und Nahrungsmittel für Fische
Method for preparing an intercalated and/or exfoliated organophillic clay from clay and macroalgae, corresponding fertiliser product, food supplement for animals and fish feed

(30) Priorité: 15.06.2012 FR 1255653
(43) Date de publication de la demande: 18.12.2013
(73) Titulaire: Olmix, 56580 Brehan (FR)
(72) Inventeur: BALUSSON, Hervé, 56580 BREHAN (FR); LAZA-KNOERR, Anca-Lucia, 22210 LA CHEZE (FR); BALUSSON, Sébastien, 22210 SAINT ETIENNE DU GUE DE L'ISLE (FR); BLOUIN, Samuel, 22210 LA FERRIERE (FR); VINTAN, Dan, 56580 BREHAN (FR)
(74) Mandataire: Ermeneux, Bertrand

(56) Documents cités:
- WO-A1-2005/068364
- DE-A1-102007 020 242
- DE-A1-102010 002 210
- DE-C1- 10 120 433
- FR-A1- 2 874 912
- US-B1- 6 251 839

## Description

### 1. Domaine de l'invention

Le domaine de l'invention est celui des matériaux composites élaborés au moins en partie à partir de matière organique.

Plus précisément, l'invention concerne une argile organophile intercalée et/ou exfoliée, et son procédé de préparation.

L'invention trouve notamment mais non exclusivement une application dans la fabrication de produits fertilisants, d'aliments pour poisson, de compléments alimentaires destinés aux animaux, et de céramiques. Elle peut également être utilisée à titre d'additif dans l'alimentation animale pour améliorer la digestibilité, stabiliser la flore intestinale, et/ou inhiber la production de méthane dans le rumen des ruminants.

### 2. Etat de la technique

Les argiles sont des roches sédimentaires composées principalement de silicates structurés en feuillets, ou phyllosilicates.

Elles présentent une aptitude remarquable à écarter leurs feuillets pour permettre à des molécules de tailles diverses, d'origine minérale ou organique, de pénétrer entre ces feuillets, lorsqu'elles sont soumises à un traitement adapté.

On connait des argiles traitées avec des composants organiques, au sein desquelles des cations organiques ont été adsorbés dans l'espace interfoliaire, dans des conditions de réaction favorables, en se substituant à des cations alcalins, de sorte à augmenter l'espace entre les interstices. On connait également une technique de traitement des argiles avec des composants organiques consistant à modifier la nature des ligands auxquels sont coordonnés les cations des espaces interfoliaires.

Ces traitements confèrent un caractère organophile à l'argile, ou en d'autres termes une forte affinité avec les molécules organiques, ce qui peut permettre, par exemple, d'utiliser une argile organophile pour traiter des effluents ou, de les employer comme charge dans des matrices polymères pour produire des nanocomposites argile-polymère (M. Darder et al. Advanced Materials, vol. 19 issue 10, pp. 1309-1319, may, 2007).

On rencontre principalement des argiles organophiles sous une forme agrégée dans laquelle des cations organiques sont intercalés entre ses feuillets, encore appelées par raccourci argiles intercalées, ou sous une forme exfoliée, ou en d'autres termes délaminée, où les feuillets sont séparées et dispersées, par exemple dans une solution ou une matrice.

De manière classique, on obtient une argile organophile intercalée en mélangeant intimement, par exemple à l'aide d'un agitateur à hélice, de l'argile avec un composant organique, ou agent intercalant organique, utilisé sous une forme purifiée, par exemple une solution d'ammonium quaternaire, de polyphénol, de polyol polymérique hydrosoluble ou d'alcool polyédrique pur.

Afin de pouvoir utiliser une argile organophile intercalée pour adsorber des composés organiques volumineux difficiles à capter par d'autres matériaux, on cherche à l'exfolier au moins partiellement, ce qui permet de développer des liaisons fortes entre les feuillets et le composé organique.

Pour obtenir un espace interfoliaire suffisant pour permettre une exfoliation efficace d'une argile organique intercalée, on a observé que la taille minimale de l'espace interfoliaire au sein de l'argile intercalée doit typiquement être d'au moins 5 Angströms et de préférence d'au moins 10 Angströms.

L'espace interfoliaire dépendant à la fois de la nature des phyllosilicates et de celle des cations organiques adsorbés, on cherche donc à utiliser des argiles et des composants organiques adaptés.

On connait des méthodes de traitement pour préparer des argiles organophiles intercalées et/ou exfoliées mettant en oeuvre des molécules organiques de synthèse et/ou des agents chimiques réactionnels ou des solvants de synthèse.

Un inconvénient de ces méthodes de traitement par voie chimique est qu'elles ne sont pas respectueuses de l'environnement. Notamment, des quantités résiduelles d'agents chimiques ou de solvants peuvent subsister au sein de l'argile après traitement, ce qui est d'autant plus critique que les agents chimiques ou les solvants employés sont le plus souvent polluants.

Un autre inconvénient de ces méthodes de traitement connues est que la sorption des cations organiques s'opère lentement.

Ces techniques de traitement ont également pour inconvénients d'être coûteuses et/ou d'être complexes à maîtriser.

Afin d'apporter une solution à ces problèmes, et en particulier d'offrir une argile organophile intercalée ou exfoliée à base de composés naturels et obtenue par un procédé respectueux de l'environnement, on a proposé des techniques, décrites dans les demandes de brevet WO 2006/030075, FR 2882997 et FR 2874912, consistant à préparer une argile organophile à partir d'un biopolymère extrait d'algues agissant comme composé intercalant, connue sous le nom commercial d'"amadéite"(marque déposée).

Un inconvénient de la technique dite d'"amadéite" est qu'elle s'avère assez complexe, notamment du fait qu'elle requiert au préalable d'extraire d'une algue des polysaccharides, tels que l'ulvane, la carraghénane ou l'alginate par exemple.

Un autre inconvénient de cette technique est que le prix de revient de l'"amadéite" est élevé, ce qui limite le nombre d'applications pour lesquelles son utilisation s'avère économiquement viable, à savoir notamment la production de nanocomposites phyllosilicate-biopolymère destinés aux industries de la cosmétique ou de la pharmacie, et plus généralement à la fabrication de produits à forte valeur ajoutée.

### 3. Objectifs de l'invention

L'invention a donc notamment pour objectif de pallier les inconvénients de l'état de la technique cités ci-dessus.

Plus précisément l'invention a pour objectif de fournir une technique d'obtention d'une argile organophile intercalée et/ou exfoliée qui soit d'un coût de revient réduit.

Un autre objectif de l'invention est de fournir une technique d'obtention d'une argile organophile intercalée et/ou exfoliée qui soit simple à mettre en oeuvre.

Un objectif de l'invention est également de proposer une technique permettant d'obtenir une argile organophile intercalée et/ou exfoliée à partir de matières naturelles uniquement, et notamment sans intermédiaire chimique et donc sans transfert de charge polluante.

Encore un objectif de l'invention est de fournir une technique d'obtention d'une argile organophile intercalée et/ou exfoliée qui soit efficace et fiable.

### 4. Exposé de l'invention

La demanderesse cherchant à atteindre ces objectifs et d'autres qui apparaitront par la suite, a constaté, d'une manière inattendue, qu'il était possible de préparer une argile organophile intercalée et/ou exfoliée à partir d'argile et de macroalgues, grâce à un procédé de préparation inédit.

Il convient de noter que l'invention est d'autant plus surprenante qu'il est bien connu que, dans la nature, des argiles mises en contact avec des macroalgues ne se transforment pas en argiles intercalées et/ou exfoliées.

Dans le cadre de l'invention, on entend par le terme "argile" un phyllosilicate d'origine naturelle ou synthétique présentant une structure en feuillets appropriée, permettant une adsorption de cation dans l'espace interfoliaire. Il peut notamment s'agir de smectites, telles que les montmorillonites par exemple, et en particulier les montmorillonites de sodium, de potassium et/ou de calcium, les nontronites, bedelleites, volkonskoïtes, hectorites, saponites, sauconites, sobockites, stevensites, svinfordites et les vermiculites

Le terme "argile" couvre aussi, plus généralement, un mélange de différentes argiles.

Le terme " macroalgues" est entendu dans une acception large, et couvre les espèces végétales marines de grande taille renfermant notamment des polysaccharides solubles dans l'eau, des acides aminés et des polyols. Il peut être envisagé d'utiliser, dans le cadre de l'invention, plusieurs variétés de macroalgues en mélange.

Les macroalgues mise en oeuvre par l'invention peuvent être des macroalgues issues de région septentrionales, par exemple de Norvège, qui peuvent présenter une teneur en matière sèche comprise entre 11 et 20%, ou des macroalgues provenant de régions méridionales, par exemple des côtes bretonnes, ou subtropicales dont la teneur en matière sèche varie généralement entre 3 et 14%.

Il peut s'agir de macroalgues fraiches plus ou moins mouillées sur leur surface, ou de macroalgues séchées puis hydratées.

Selon l'invention, un tel procédé de préparation d'une argile organophile intercalée et/ou exfoliée comprend les étapes suivantes :
- obtention de macroalgues comprenant entre 0,2 et 20% de matière sèche, de préférence entre 6 et 20% de matière sèche ;
- broyage desdites macroalgues ;
- mélange sous cisaillement desdites macroalgues broyées avec une masse de ladite argile représentant entre 0,25 et 1,6 fois la masse desdites macroalgues, en proportions, sur extraits humides, pendant une durée suffisante pour permettre une intercalation et/ou une exfoliation convenable de ladite argile, et de préférence au moins égale à une heure.

Ainsi, de façon inédite, l'invention propose d'obtenir une argile organophile intercalée et/ou exfoliée en mélangeant intimement sous cisaillement, dans des proportions définies, de l'argile avec des macroalgues fraiches ou réhydratées ayant subi pour seules transformations un broyage, et le cas échéant un lavage.

Le procédé selon l'invention est particulièrement astucieux, car contrairement aux techniques de préparation d'une argile organophile intercalée et/ou exfoliée connues, ce n'est pas un composé organique purifié qui est mélangé avec de l'argile, mais de la matière organique disponible en l'état dans la nature.

En outre, une seule étape de mélange suffit pour obtenir une argile organophile intercalée et/ou exfoliée, ce qui est particulièrement simple et bien adapté à une mise en oeuvre industrielle.

Dans le cadre de l'invention, on entend par l'expression " intercalation et/ou une exfoliation convenable de ladite argile" qu'au moins 10% du volume masse d'argile est intercalée et/ou exfoliée. En pratique, la Demanderesse a constaté qu'une durée de mélange d'au moins une heure est le plus souvent nécessaire pour tendre vers un état stable du mélange.

La demanderesse a observé que lorsque le rapport massique argile/macroalgues est inférieur ou égal à 0,25, la teneur en argiles intercalées et/ou exfoliées obtenues n'augmente presque plus quelle que soit la durée du mélange. Augmenter la proportion de macroalgues au delà de 4 fois la masse d'argile est donc inopérant pour valoriser la masse d'argile introduite dans le mélange, tout en étant consommateur d'algues.

On note également qu'en choisissant astucieusement un rapport massique argile/macroalgues inférieur ou égale à 1,6, on s'assure que les argiles intercalées et/ou exfoliées comprennent au moins 10%, et généralement au moins 15 à 20% en poids (sur extraits sec) de macroalgues par rapport au poids d'argile sèche (comprenant moins de 5% d'eau).

Avantageusement, ledit mélange sous cisaillement est mis en oeuvre au moins partiellement à l'aide d'une extrudeuse bi-vis.

Ainsi, la pression exercée par l'extrudeuse favorise la pénétration et l'intercalation des composants organiques issus des macroalgues au niveau des feuillets d'argile.

Selon un mode de réalisation particulièrement avantageux de l'invention, un tel procédé de préparation d'une argile organophile intercalée et/ou exfoliée comprend une étape de séchage dudit mélange sous vide à une température comprise entre 30°C et 95°C, de préférence comprise entre 60°C et 90°C et encore plus préférentiellement comprise entre 70°C et 90°C.

Ainsi, on prolonge la phase d'intercalation et/ou d'exfoliation de l'argile pendant le séchage du mélange, sous l'action combinée du vide et de la température.

Cette étape de séchage permet notamment d'obtenir une plus forte proportion d'argile intercalée et/ou exfoliée sous forme solide à partir du mélange initial d'argile et de macroalgues et d'obtenir des argiles intercalées présentant un écartement entre feuillets plus important et/ou une teneur en argiles exfoliées plus importante permettant d'adsorber des composés organiques complexes.

Préférentiellement, la durée de ladite étape de séchage est au moins égale à 2 heures.

La demanderesse a en effet observé, qu'un séchage trop rapide du mélange, et plus précisément en moins de 2 heures, peut diminuer la quantité d'argile intercalée pouvant être obtenue, et de façon encore plus marquée la quantité d'argile exfoliée au sein de celui-ci.

De façon encore plus préférée, la durée de ladite étape de séchage est au moins égale à 10 heures.

Selon un aspect particulier de l'invention, lors de ladite étape de séchage, ledit mélange est soumis à un vide primaire, ou en d'autres termes est maintenu sous une pression absolue comprise entre 10 mbar et la pression atmosphérique. De préférence, le vide primaire appliqué au mélange correspond à une pression absolue comprise entre 100 et 200 mbars, et encore plus préférentiellement sensiblement égale à 150 mbars.

De façon avantageuse, lors de ladite étape de mélange, ledit mélange est porté à une température comprise entre 30°C et 90°C, et de préférence sensiblement égale 75°C.

La demanderesse a en effet constaté que dans cette plage de température, on favorise l'adsorption des biopolymères contenus dans les macroalgues entre les feuillets d'argile.

Dans au moins un mode de réalisation particulier de l'invention, la durée de ladite étape de mélange sous cisaillement est au moins égale à 2 heures.

Selon un aspect particulier de l'invention, lors du mélange, le rapport massique de ladite argile par rapport auxdites macroalgues est compris entre 0,3 et 1, de préférence entre 0,35 et 0,7, et de manière encore plus préférée est égal à 0,42.

Ainsi on obtient de l'argile majoritairement intercalée et/ou exfoliée, sans consommer plus de macroalgues que nécessaire.

Dans des modes de réalisation particuliers de l'invention, le rapport massique de ladite argile par rapport auxdites macroalgues au sein du mélange est supérieur à 1. Ce rapport est égal respectivement à 1,2, 1,4, et 1,5 dans trois exemples de modes de réalisation particuliers de l'invention.

Préférentiellement, lors de ladite étape de broyage, lesdites macroalgues sont réduites en fragments de taille inférieure ou égale à 3 millimètres, préférentiellement inférieure ou égale à 0,7 millimètre.

Ceci permet ainsi de réaliser un mélange homogène.

De façon avantageuse, lesdites macroalgues sont du genre ulva et de préférence de l'espèce ulva lactuca.

Les algues vertes du genre ulva, ou ulves, sont connues pour proliférer de façon endémique sur les côtes, notamment sur les côtes atlantiques et méditerranéennes. Elles constituent une matière première disponible et d'accès aisé dont on recherche la valorisation.

Dans d'autres modes de réalisation de l'invention, il peut être envisagé de mettre en oeuvre des algues rouges (Rhodophytes), ou des algues brunes (Phaeophyceae), dans le mélange.

Dans au moins un mode de réalisation particulier de l'invention, lors de ladite étape de mélange, on mélange avec ladite argile et lesdites macroalgues broyées au moins un des éléments appartenant au groupe comprenant :
- lisier ;
- phase liquide d'un digestat de déchets organiques d'origine agricole ou industrielle ;
- oligo-élément, tel que par exemple du cuivre sous forme de sulfate de cuivre ;
- acide organique, tel que l'acide lactique ;
- gélifiant, tel qu'un polysaccharide d'origine végétale ou animale.

On obtient ainsi après mélange, une suspension en phase liquide contenant de l'argile intercalée et/ou exfoliée améliorée, ayant adsorbé des dérivés azotés ou potassiques d'un lisier ou d'un digestat, du cuivre un acide organique, et/ou des extraits d'un gélifiant.

Il peut être envisagé d'utiliser la suspension obtenue sans transformation.

Ainsi, par exemple, une suspension obtenue par mélange d'argile, de macroalgues et d'acide lactique ou de gélifiant peut être utilisée en l'état comme complément alimentaire pour les animaux.

On peut prévoir de déshydrater la suspension, afin par exemple de former un bloc à lécher.

Les particules solides d'argile intercalée et/ou exfoliée, peuvent être séparées de la phase liquide de la suspension par centrifugation.

Lorsque du lisier ou une phase liquide d'un digestat a été introduit dans le mélange, ceci permet par exemple d'obtenir une poudre utilisable comme engrais, après lavage et séchage de l'argile intercalée et/ou exfoliée extraite de la suspension, et le cas échéant après compactage sous forme de granulés.

Il convient par ailleurs de noter que l'ajout de sulfate de cuivre dans le mélange peut avantageusement permettre de préparer une suspension susceptible d'agir comme agent antibactérien et comme catalyseur des réactions biochimiques opérant dans le système animal.

Il peut également être envisagé d'introduire de la zéolithe dans le mélange d'argile et de macroalgues, afin d'améliorer la capacité de rétention d'eau du mélange et la capacité du mélange à adsorber des nitrates et du potassium.

Dans au moins un mode de réalisation de l'invention, un engrais présentant des performances convenables est obtenu en mélangeant avec ladite argile, lesdites macroalgues broyées, du lisier ou du digestat, et de la zéolithe, le rapport massique des macroalgues, du lisier ou du digestat et de la zhéolithe, pris ensemble, par rapport à ladite argile étant supérieur ou égal à 0,63.

L'invention concerne également une argile organophile intercalée et/ou exfoliée obtenue par l'un quelconque des procédés de préparation décrit ci-dessus.

Notamment, l'invention concerne une telle argile organophile présentant un écartement moyen entre feuillets au moins égal à 10 Å, de préférence au moins égal à 30 Å, et/ou au moins 10% de feuillets exfoliés.

On peut ainsi envisager d'insérer des composés de nature et de taille variées dans la structure en feuillet de l'argile, ce qui ouvre la voie à de nombreuses applications.

Selon un mode de réalisation préférentiel de l'invention, ladite argile est une argile micronisée, se présentant de préférence sous la forme de particules de diamètre équivalent compris entre 20 et 40 micromètres, et de préférence égal à environ 7 micromètres.

La finesse des particules d'argile favorise ainsi le contact entre l'argile et les macroalgues au sein du mélange.

De façon préférentielle, ladite argile est une bentonite sodique activée.

La bentonite sodique activée présente en effet une capacité d'échange cationique et un pouvoir de gonflement remarquables. En outre son approvisionnement est aisé.

L'invention concerne également un produit fertilisant tel qu'un engrais ou un produit fertilisant à effet antifongique, un complément alimentaire destiné aux animaux, notamment aux poissons d'élevage, et une charge pour céramique comprenant une argile organophile obtenue par l'un des procédés de préparation décrits précédemment.

### 5. Description détaillée de l'invention

D'autres caractéristiques et avantages de l'invention apparaitront plus clairement à la lecture de la description suivante de modes de réalisation de l'invention, donnés à titre de simples exemples illustratifs et non limitatifs, et des figures annexées, parmi lesquelles :
- la figure 1 représente les étapes d'un procédé de préparation d'une argile organophile selon l'invention, sous forme de schéma bloc ;
- la figure 2 est une représentation normalisée des diffractogrammes de huit échantillons d'argiles organophiles obtenues selon un procédé de préparation selon l'invention.

### 5.1 Exemple de mode de réalisation de l'invention

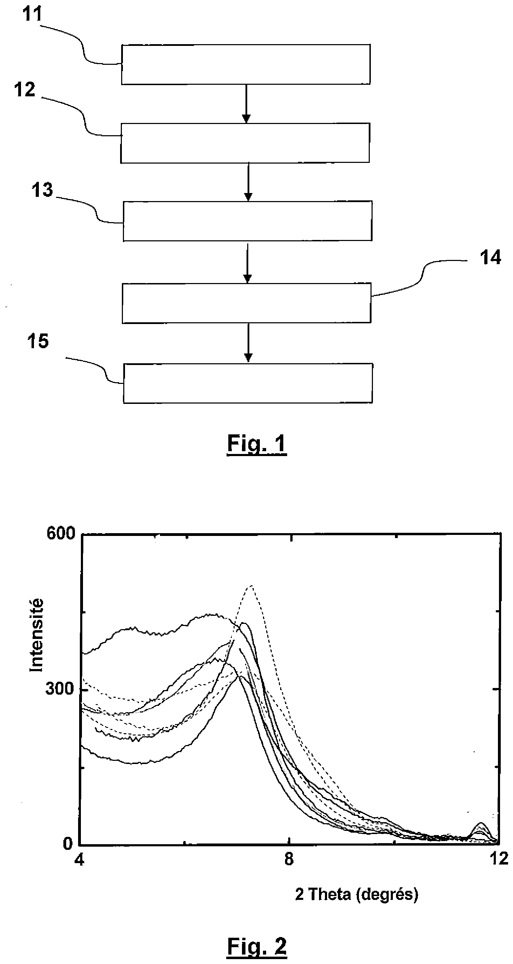

Sur la figure 1, on a représenté de façon synoptique les étapes d'un procédé de préparation d'une argile organophile intercalée et/ou exfoliée selon l'invention à partir de 100 kg d'algues vertes fraiches de l'espèce ulva lactuca récoltées sur une zone d'estran, contenant 11% de matière sèche.

On verse dans une étape 11 les algues dans un broyeur à couteaux équipé d'une grille de tamisage de maille 1,7 millimètre.

Le broyat d'algues recueilli au niveau de la crépine de vidange du broyeur est transféré en continu, dans une étape 12, dans une cuve de mélange.

Au cours de l'étape 12, 42 kg de bentonite sodique activée micronisée à 7 µm sont versés progressivement dans la trémie de remplissage d'une extrudeuse bi-vis corotative, de sorte à pré-mélanger la bentonite et les fragments d'algues.

Ce pré-mélange est malaxé sous pression et cisaillé par l'extrudeuse bi-vis à une vitesse d'environ 50 tr/mn pendant 2 heures dans une étape 13. On note que le cisaillement élongationnel exercé par l'extrudeuse dans cette étape favorise l'exfoliation des particules qui ont été intercalées.

Lors de cette étape 13, la température du mélange est maintenue à 75°C grâce à une unité de régulation de température agissant sur des éléments chauffants montés sur les bords latéraux de l'extrudeuse.

Le mélange obtenu est ensuite déversé dans une cuve fermée.

Dans une étape 14, on dépressurise la cuve jusqu'à atteindre un vide primaire d'une valeur de 150 mbars en pression absolue, de façon à favoriser la poursuite du processus d'intercalation/exfoliation, et on procède au séchage sous vide du mélange obtenu, pendant une durée de 14 heures, à une température de 75°C.

Le contenu de la cuve est tamisé dans une étape 15, afin d'isoler les particules de bentonite partiellement intercalées et/ou exfoliées, contenant désormais environ 20% en masse de composés algaux adsorbés, d'espacement interfoliaire moyen compris entre 10 et 20 Å.

On note que les particules de bentonite organophile obtenues peuvent par exemple être incorporées en l'état dans une préparation alimentaire pour animaux, comme complément ou comme additif alimentaire, à raison de 0,1% à 10% en masse, de préférence 4 à 6% en masse, et encore plus préférentiellement 5% en masse.

À titre d'exemple, il peut être envisagé de mélanger 5,5% en masse de particules de bentonite organophile selon l'invention avec des protéines d'origine végétale et/ou animale afin d'obtenir une préparation alimentaire destinée à être consommée par des poissons d'élevage dans des fermes piscicoles.

On peut également prévoir de nourrir des poissons uniquement avec de l'argile organophile intercalée et/ou exfoliée selon l'invention, dans un mode de réalisation particulier de l'invention.

Elles peuvent également être utilisées en l'état dans la composition d'une céramique, au sein de laquelle elles peuvent avantageusement être utilisées comme charge dans des proportions massiques comprises entre 0,5 à 2%, et de préférence entre 0,8 à 1,2%.

Ces particules peuvent encore être utilisées pour produire une base d'engrais, en les mélangeant à de la zéolithe et du lisier porcin.

Dans des variantes de ce mode de réalisation d'une argile organophile selon l'invention, il peut également être prévu de mélanger 100kg d'algues broyées fraiches avec 30kg, 60kg ou 90kg de bentonite.

### 5.2. Autres exemples de mode de réalisation de l'invention

On décrit ci-après un procédé alternatif de préparation d'une base d'engrais binaire à partir d'un mélange de 20kg de montmorillonite, de 40 kg de macroalgues fraiches broyées, de 60 kg de zéolithe de type clinoptilolite et de 150 litres d'une phase liquide d'un digestat de déchets organiques industriels présentant une teneur en azote d'environ 3800 ppm et une teneur en potassium de 3200 ppm.

Après agitation de ce mélange pendant 18h, à température ambiante, on observe que la montmorillonite et la zéolithe se saturent en azote et potassium, dans des proportions pondérales respectives supérieures à 1,3% de la masse totale de montmorillonite et de zéolithe.

À l'issue du mélange, la phase solide du mélange est séparée par centrifugation, puis séchée suivant une technique de séchage connue en soi.

La base d'engrais solide obtenue est complétée avec des sources d'oligo-éléments connues en soi, par exemple du sulfate de fer monohydraté pour l'apport en fer, provenant d'un sous-produit du traitement de l'ilménite, communément appelé "filtersaltz", et le cas échéant des phosphates, afin d'obtenir un engrais organique complet.

Il convient de noter qu'avant d'être rejetée avec les effluents dans un cours d'eau, la phase liquide du mélange subit un traitement afin notamment d'éliminer les métaux lourds. À cet effet, un matériau composite du type de ceux décrits dans le document PCT/FR2008/051125 peut par exemple être utilisé pour piéger les métaux lourds. Dans des variantes de ce mode de réalisation d'une base d'engrais, il peut être envisagé d'incorporer une masse de zéolithe dans le mélange représentant 0,25 à 4 fois la masse cumulée d'argile et d'algues fraiches broyées introduite dans le mélange.

On donne dans le tableau 1 ci-dessous un exemple de formulation d'un mélange destiné à être distribué aux aux bovins dans le cadre de leur alimentation. Les quantités de chaque constituant du mélange sont données en pourcentage pondéral dans ce tableau 1.

**tableau 1**

| Produit | % |
|---|---|
| bentonite | 13 |
| algues fraiches broyées (ulva lactuca) | 30 |
| eau | 49 |
| Solution d'acide lactique (9%) | 8 |

Afin d'obtenir un mélange prêt à l'emploi, ce mélange est avantageusement maintenu à une température de 45°C et agité pendant 3h, de sorte à permettre une intercalation convenable des composés algaux entre les feuillets de bentonite, et pour une partie d'entre-eux leur exfoliation.

Dans des variantes de réalisation de ce mélange pour l'alimentation animale, il peut être prévu de faire varier la proportion d'eau dans le mélange entre 45 et 55%, et la proportion de solution d'acide lactique dans le mélange entre 6 et 9%.

On note que ce mélange pour l'alimentation bovine peut avantageusement être distribué sous la forme d'un bloc à lécher.

Le tableau 2 ci-dessous précise la formulation d'un mélange liquide destiné à être utilisé comme agent antibactérien. Les quantités de chaque constituant du mélange sont données en pourcentage pondéral dans le tableau 2.

**tableau 2**

| Produit | % |
|---|---|
| bentonite | 14,37 |
| algues fraiches broyées (ulva lactuca) | 32,35 |
| eau | 53,19 |
| Sulfate de cuivre pentahydraté | 0,09 |

Après avoir versé les constituants listés dans le tableau 2 dans une cuve, et mélangé l'ensemble pendant une heure à une température de 75°C, on obtient une suspension liquide dans laquelle de la bentonite se présentant sous la forme de particules intercalées par des composés algaux et d'ensemble de feuillets exfoliés dispersés dans la suspension, est chargée à 500 ppm en cuivre.

### 5.3. Mesure du degré d'exfoliation de différentes argiles organophiles obtenues selon un procédé de préparation selon l'invention

On a représenté sur la figure 2, les diagrammes de diffraction obtenus par diffractométrie par rayons X, ou diffractogrammes, de 8 échantillons d'argiles organophiles intercalées et/ou exfoliées obtenues chacune par le procédé de préparation selon l'invention décrit en référence à la figure 1.

Sur la figure 2, les différents diffractogrammes ont été normalisés en utilisant le pic de diffraction associé à une distance intra-feuillet égale à 45 nm.

Le taux de matière sèche des macroalgues vertes utilisées pour préparer ces 8 échantillons d'argiles organophiles intercalées et/ou exfoliées est compris entre 10,0 et 11,2%. Le rapport massique argile sur macroalgues humides est respectivement de 0,27, 0,44, 0,46, 0,54, 0,63, 0,66, 1 et 1,58 pour ces différents échantillons.

L'interprétation de ces différents diffractogramme montre que les différents échantillons présentent chacun une teneur en argiles exfoliées significative, évaluée entre 10 et 90% selon les échantillons, qui augmente lorsque le rapport argile/macroalgues diminue.

## Revendications

1. Procédé de préparation d'une argile organophile intercalée et/ou exfoliée à partir d'argile et de macroalgues, comprenant les étapes suivantes :
- obtention de macroalgues comprenant entre 0,2 et 20% de matière sèche, de préférence entre 6 et 20% de matière sèche ;
- broyage (11) desdites macroalgues ;
- mélange sous cisaillement (13) desdites macroalgues broyées avec une masse de ladite argile représentant entre 0,25 et 1,6 fois la masse desdites macroalgues, en proportions, pendant une durée suffisante pour permettre une intercalation et/ou une exfoliation convenable de ladite argile, et de préférence au moins égale à une heure.

2. Procédé de préparation d'une argile organophile intercalée et/ou exfoliée selon la revendication 1, caractérisé en ce ledit mélange sous cisaillement est mis en oeuvre au moins partiellement à l'aide d'une extrudeuse bi-vis.

3. Procédé de préparation d'une argile organophile intercalée et/ou exfoliée selon l'une quelconque des revendications 1 et 2, **caractérisé en ce qu'**il comprend une étape de séchage dudit mélange sous vide à une température comprise entre 30°C et 95°C, de préférence comprise entre 60°C et 90°C et de manière encore plus préférée comprise entre 70°C et 90°C.

4. Procédé de préparation d'une argile organophile intercalée et/ou exfoliée selon la revendication 3, **caractérisé en ce que** la durée de ladite étape de séchage est au moins égale à 2 heures.

5. Procédé de préparation d'une argile organophile intercalée et/ou exfoliée selon l'une quelconque des revendications 3 et 4, **caractérisé en ce que** lors de ladite étape de séchage, ledit mélange est soumis à un vide primaire, correspondant de préférence à une pression absolue comprise entre 100 et 200 mbars, et encore plus préférentiellement sensiblement égale à 150 mbars.

6. Procédé de préparation d'une argile organophile intercalée et/ou exfoliée selon l'une quelconque des revendications 1 à 5, **caractérisé en ce que** lors de ladite étape de mélange, ledit mélange est porté à une température comprise entre 30°C et 90°C, et de préférence sensiblement égale à 75°C.

7. Procédé de préparation d'une argile organophile intercalée et/ou exfoliée selon l'une quelconque des revendications 1 à 6, **caractérisé en ce que** ladite durée de ladite étape de mélange est au moins égale à 2 heures.

8. Procédé de préparation d'une argile organophile intercalée et/ou exfoliée selon l'une quelconque des revendications 1 à 7, **caractérisé en ce que**, lors du mélange, le rapport massique de ladite argile par rapport auxdites macroalgues est compris entre 0,3 et 1, préférentiellement entre 0,35 et 0,7, et de manière encore plus préférentielle est égal à 0,42.

9. Procédé de préparation d'une argile organophile intercalée et/ou exfoliée selon l'une quelconque des revendications 1 à 8, **caractérisé en ce que** lors de ladite étape de broyage, lesdites macroalgues sont réduites en fragments de taille inférieure ou égale à 3 millimètres, préférentiellement inférieure ou égale à 0,7 millimètre.

10. Procédé de préparation d'une argile organophile intercalée et/ou exfoliée selon l'une quelconque des revendications 1 à 9, **caractérisé en ce que** lesdites macroalgues sont du genre ulva et de préférence de l'espèce ulva lactuca.

11. Procédé de préparation d'une argile organophile intercalée et/ou exfoliée selon l'une quelconque des revendications 1 à 10, **caractérisé en ce que** lors de ladite étape de mélange, on mélange avec ladite argile et lesdites macroalgues broyées au moins un des éléments appartenant au groupe comprenant :
- lisier ;
- phase liquide d'un digestat de déchets organiques d'origine agricole ou industrielle ;
- oligo-élément ;
- acide organique, tel que l'acide lactique ;
- gélifiant.

12. Produit fertilisant comprenant une argile organophile intercalée et/ou exfoliée obtenue par l'un quelconque des procédés de préparation selon les revendications 1 à 11.

13. Complément alimentaire destiné aux animaux, notamment aux poissons d'élevage, comprenant une argile organophile intercalée et/ou exfoliée obtenue par l'une quelconque des procédés de préparation selon les revendications 1 à 11.

14. Utilisation d'une argile organophile intercalée et/ou exfoliée obtenue par l'un quelconque des procédés de préparation selon les revendications 1 à 11 comme aliment pour poisson.

## Patentansprüche

1. Verfahren zur Herstellung eines interkalierten und/oder exfolierten, organophilen Tons aus Ton und Makroalgen, das die folgenden Schritte aufweist:
- Erhalten von Makroalgen, umfassend zwischen 0,2 bis 20 % Trockenmasse, vorzugsweise zwischen 6 und 20 % Trockenmasse;
- Mahlen (11) der Makroalgen;
- Schermischen (13) der gemahlenen Makroalgen mit einer Masse des Tons, die zwischen dem 0,25- und 1,6-fachen der Masse der Makroalgen in Anteilen darstellt, für eine Zeit, die ausreichend ist, um ein Interkalieren und/oder ein geeignetes Exfolieren des Tons zu ermöglichen, und die vorzugsweise mindestens gleich einer Stunde ist.

2. Verfahren zur Herstellung eines interkalierten und/oder exfolierten, organophilen Tons nach Anspruch 1, **dadurch gekennzeichnet, dass** das Schermischen mindestens teilweise mittels eines Doppelschneckenextruders umgesetzt wird.

3. Verfahren zur Herstellung eines interkalierten und/oder exfolierten, organophilen Tons nach einem der Ansprüche 1 und 2, **dadurch gekennzeichnet, dass** es einen Schritt des Trocknens der Mischung unter Vakuum bei einer Temperatur zwischen 30 °C und 95 °C, vorzugsweise zwischen 60 °C und 90 °C und insbesondere zwischen 70 °C und 90°C aufweist.

4. Verfahren zur Herstellung eines interkalierten und/oder exfolierten, organophilen Tons nach Anspruch 3, **dadurch gekennzeichnet, dass** die Dauer des Schrittes des Trocknens mindestens gleich 2 Stunden beträgt.

5. Verfahren zur Herstellung eines interkalierten und/oder exfolierten, organophilen Tons nach einem der Ansprüche 3 und 4, **dadurch gekennzeichnet, dass** während des Schrittes des Trocknens die Mischung einem Primärvakuum ausgesetzt wird, das vorzugsweise einem absoluten Druck entspricht, der zwischen 100 und 200 mbar liegt und insbesondere im Wesentlichen gleich 150 mbar ist.

6. Verfahren zur Herstellung eines interkalierten und/oder exfolierten, organophilen Tons nach einem der Ansprüche 1 bis 5, **dadurch gekennzeichnet, dass** während des Schrittes des Mischens die Mischung auf eine Temperatur gebracht wird, die zwischen 30 °C und 90°C liegt und vorzugsweise im Wesentlichen gleich 75 °C ist.

7. Verfahren zur Herstellung eines interkalierten und/oder exfolierten, organophilen Tons nach einem der Ansprüche 1 bis 6, **dadurch gekennzeichnet, dass** die Dauer des Schrittes des Mischens mindestens gleich 2 Stunden beträgt.

8. Verfahren zur Herstellung eines interkalierten und/oder exfolierten, organophilen Tons nach einem der Ansprüche 1 bis 7, **dadurch gekennzeichnet, dass** während des Mischens das Gewichtsverhältnis des Tons zu den Makroalgen zwischen 0,3 und 1, vorzugsweise zwischen 0,35 und 0,7 liegt, und insbesondere gleich 0,42 beträgt.

9. Verfahren zur Herstellung eines interkalierten und/oder exfolierten, organophilen Tons nach einem der Ansprüche 1 bis 8, **dadurch gekennzeichnet, dass** während des Schrittes des Mahlens die Makroalgen in Fragmente von einer Größe von weniger als oder gleich 3 Millimetern, vorzugsweise von weniger als oder gleich 0,7 Millimetern zerkleinert werden.

10. Verfahren zur Herstellung eines interkalierten und/oder exfolierten, organophilen Tons nach einem der Ansprüche 1 bis 9, **dadurch gekennzeichnet, dass** die Makroalgen von der Gattung Ulva und vorzugsweise von der Spezies Ulva lactuca sind.

11. Verfahren zur Herstellung eines interkalierten und/oder exfolierten, organophilen Tons nach einem der Ansprüche 1 bis 10, **dadurch gekennzeichnet, dass** während des Schrittes des Mischens mit dem Ton und den gemahlenen Makroalgen mindestens eines der Elemente vermischt wird, die zu der Gruppe gehören, umfassend:
- Gülle;
- flüssige Phase eines Gärrestes von organischen Abfällen landwirtschaftlichen oder industriellen Ursprungs;
- Spurenelement;
- organische Säure, wie etwa die Milchsäure;
- Geliermittel.

12. Düngemittelprodukt, umfassend einen interkalierten und/oder exfolierten, organophilen Ton, der durch eines der Verfahren zur Herstellung nach den Ansprüchen 1 bis 11 erhalten wird.

13. Nahrungsergänzungsmittel, das für Tiere bestimmt ist, insbesondere für Zuchtfische, umfassend einen interkalierten und/oder exfolierten, organophilen Ton, der durch eines der Verfahren zur Herstellung nach den Ansprüchen 1 bis 11 erhalten ist.

14. Verwendung eines interkalierten und/oder exfolierten, organophilen Tons, der durch eines der Verfahren zur Herstellung nach den Ansprüchen 1 bis 11 erhalten wird, als Fischfutter.

## Claims

1. A method for preparing an intercalated and/or exfoliated organophilic clay from clay and macroalgae, comprising the following steps:
- obtaining macroalgae comprising between 0.2 and 20% of dry matter, preferably between 6 and 20% of dry matter;
- crushing (11) said macroalgae;
- shear mixing (13) said crushed macroalgae with a mass of said clay representing between 0.25 and 1.6 times the mass of said macroalgae, in proportions, for a time sufficient to enable proper intercalation and/or exfoliation of said clay, and preferably at least equal to one hour.

2. The method for preparing an intercalated and/or exfoliated organophilic clay according to claim 1, wherein said shear mixing is carried out at least partly by means of a twin-screw extruder.

3. The method for preparing an intercalated and/or exfoliated organophilic clay according to any one of claims 1 and 2, **characterised in that** it comprises a step of drying said mixture under vacuum at a temperature between 30°C and 95°C, preferably between 60°C and 90°C, and even more preferably between 70°C and 90°C.

4. The method for preparing an intercalated and/or exfoliated organophilic clay according to claim 3, wherein the duration of said drying step is at least equal to 2 hours.

5. The method for preparing an intercalated and/or exfoliated organophilic clay according to either of claims 3 and 4, wherein, during said drying step, said mixture is subjected to a primary vacuum, preferably corresponding to an absolute pressure between 100 and 200 mbar, and even more preferably substantially equal to 150 mbar.

6. The method for preparing an intercalated and/or exfoliated organophilic clay according to either of claims 1 and 5, wherein, during said mixing step, said mixture is heated to a temperature between 30°C and 90°C, and preferably substantially equal to 75°C.

7. The method for preparing an intercalated and/or exfoliated organophilic clay according to any of claims 1 to 6, **characterised in that** the duration of said mixing step is at least equal to 2 hours.

8. The method for preparing an intercalated and/or exfoliated organophilic clay according to any one of claims 1 to 7, wherein, during mixing, the mass ratio of said clay with respect to said macroalgae is between 0.3 and 1, preferably between 0.35 and 0.7, and even more preferably is equal to 0.42.

9. The method for preparing an intercalated and/or exfoliated organophilic clay according to any one of claims 1 to 8, wherein, during said crushing step, said macroalgae are reduced to fragments smaller than or equal to 3 millimetres, preferably less than or equal to 0.7 millimetre.

10. The method for preparing an intercalated and/or exfoliated organophilic clay according to any one of claims 1 to 9, **characterised in that** said macroalgae are of the genus ulva and preferably of the species ulva lactuca.

11. The method for preparing an intercalated and/or exfoliated organophilic clay as claimed in any one of claims 1 to 10, wherein, in said mixing step, at least one of the elements belonging to the group below is mixed with said clay and said crushed macroalgae, said group comprising:
- slurry;
- liquid phase of a digestate of organic waste of agricultural or industrial origin;
- oligo-element;
- organic acid, such as lactic acid;
- gelling agent.

12. A fertilising product comprising an intercalated and/or exfoliated organophilic clay obtained by any of the preparation methods according to claims 1 to 11.

13. A feed supplement for animals, in particular for farmed fish, comprising an intercalated and/or exfoliated organophilic clay obtained by any of the preparation methods according to claims 1 to 11.

14. The use of an intercalated and/or exfoliated organophilic clay obtained by any of the preparation methods according to claims 1 to 11 as a foodstuff for fish.
